# FASCICULE DE BREVET EUROPEEN

(11) **EP 0 463 267 B1**
(45) Date de publication et mention de la délivrance du brevet: **13.12.1995**
(21) Numéro de dépôt: 90402536.8
(22) Date de dépôt: 14.09.1990
(51) Int. Cl.: F02M 35/10, F02F 7/00, F01M 13/00

(54) **Dispositif d'admission pour moteur à combustion interne**
Einlassvorrichtung für Brennkraftmaschine
Intake device for internal combustion engine

(30) Priorité: 27.06.1990 FR 9008075
(43) Date de publication de la demande: 02.01.1992
(73) Titulaire: REGIE NATIONALE DES USINES RENAULT, 92109 Boulogne-Billancourt (FR)
(72) Inventeur: Garro, Denis, F-78510 Triel Sur Seine (FR); Marcon, Patrice, F-92500 Rueil-Malmaison (FR)
(74) Mandataire: Ernst-Schonberg, Michel

(56) Documents cités:
- EP-A- 448 431
- EP-A- 0 070 500
- EP-A- 0 268 200
- DE-A- 3 807 855
- DE-A- 3 818 099
- FR-A- 2 239 900
- FR-A- 2 415 207
- FR-A- 2 582 732
- GB-A- 2 167 810
- US-A- 4 649 876
- PATENT ABSTRACTS OF JAPAN vol. 8, no. 146 (M-307)(1583) 07 juillet 1984, & JP-A-59 43923

## Description

La présente invention se rapporte à un moteur à combustion interne, du type à injection indirecte, à arbre à cames en tête et à longs conduits d'admission, tel que décrit dans la préambule de la revendication 1 qui s'applique notamment sur les moteurs des véhicules automobiles de tourisme.

Le style des véhicules automobiles de tourisme modernes impose maintenant des lignes de capot très plongeantes et de ce fait cela entraîne des volumes disponibles très mesurés pour loger le moteur. De plus dans un véhicule automobile moderne, le moteur est installé transversalement avec l'échappement côté tablier. Il en résulte que la place disponible pour dessiner un collecteur d'admission comportant des conduits suffisamment longs n'est pas assez importante.

De plus les exigences en qualités de fonctionnement, dans les conditions diverses d'utilisation, imposent d'implanter des injecteurs de façon idéale par rapport aux conduits et à la soupape d'admission ; ceci afin d'éviter les effets de mouillage de paroi qui provoquent des instabilités de fonctionnement, notamment à charge partielle et en régime transitoire. Ils provoquent aussi de mauvais démarrages à froid et augmentent la pollution due aux résidus de combustion. Toutes ces nouvelles exigences amènent des solutions qui nécessitent de nombreux usinages, et cette complexité relative entraîne des coûts de fabrication élevés.

Le but de la présente invention est de proposer un moteur à combustion interne, du type à injection indirecte, à arbre à cames en tête et à longs conduits d'admission, qui permettent d'obtenir une culasse et un couvre-culasse compact ; tout en donnant au moteur des caractéristiques thermodynamiques de combustion améliorée du fait de la grande latitude de disposition laissée aux injecteurs.

Le document US - 4 649 876 décrit un moteur à combustion interne du type à injection indirecte, à arbres à cames en tête dont les conduits d'admission sont constitués chacune par un élément de canalisation inférieur disposé dans la culasse située à la partie supérieure dudit moteur considérée dans sa position verticale, orienté vers le haut et débouchant sur la face supérieure de la culasse au voisinage d'un bord longitudinal et par un élément de canalisation supérieure prolongeant ledit élément de canalisation inférieure.

Le document FR-A-2 239 900 décrit un moteur à combustion interne du type à injection indirecte, à arbres à cames en tête ayant un dispositif d'admission qui, à partir de la surface supérieure de la culasse est constitué par des éléments de canalisation supérieure surmontant la culasse pour déboucher dans le repartiteur d'air. Lesdits éléments de canalisation supérieure et ledit répartiteur d'air sont intégrés au couvre-culasse situé à sa partie supérieure de ladite culasse considérée dans sa position verticale.

La demande antérieure de brevet européen interférente EP-A-448 431 opposable seulement au titre de la nouveauté en vertu de l'article 54 (3) et (4) CBE, décrit notamment un moteur à combustion interne à arbre à cames en tête qui comporte des conduits d'admission constitués chacun par un élément de canalisation inférieur disposé dans la culasse située à la partie supérieure dudit moteur considéré dans sa position verticale, orienté vers le haut et débouchant sur la surface supérieure de ladite culasse au voisinage d'un bord longitudinal et par un élément de canalisation supérieure prolongeant ledit élément de canalisation inférieure, ledit élément de canalisation supérieure surmontant ladite culasse pour déboucher dans le répartiteur d'air, lesdits éléments de canalisation supérieure et ledit répartiteur d'air sont intégrés au couvre-culasse situé à sa partie supérieure de ladite culasse dans sa position verticale et la recirculation des gaz de carter s'effectue à travers un perçage reliant le répartiteur d'air au décanteur.

L'invention concerne donc un moteur à combustion interne à injection indirecte et à arbre à cames en tête comportant des conduits d'admission qui sont constitués chacun par un élément de canalisation inférieure dans lequel débouche un injecteur, ledit élément de canalisation inférieure étant disposé dans la culasse et orienté vers le haut, et débouchant sur la surface supérieure de la culasse au voisinage d'un bord longitudinal de manière qu'il coopère avec un élément de canalisation supérieure qui le prolonge. L'élément de canalisation supérieure surmonte la culasse pour déboucher dans le répartiteur d'air, les éléments de canalisation supérieure et la répartiteur d'air sont intégrés au couvre-culasse et la recirculation des gaz de carter s'effectue directement à travers au moins un perçage reliant le répartiteur d'air au décanteur.

De plus le couvre-culasse peut être en alliage (aluminium, magnésium, etc...) obtenu par fonderie, ou en matériau plastique, ou encore en matériau mixte combinant alliage léger et matériau plastique.

La présente invention offre ainsi l'avantage de supprimer un maximum d'usinage, ce qui permet de réduire le coût de fabrication.

D'autres caractéristiques et avantages de la présente invention ressortiront de la description qui suit le mode de réalisation donné à titre d'exemple en référence aux dessins annexés sur lesquels :
- la figure 1 est une coupe suivant l'axe de l'un des conduits d'admission selon l'invention,
- la figure 2 est une coupe partielle transversale analogue à la figure 1.

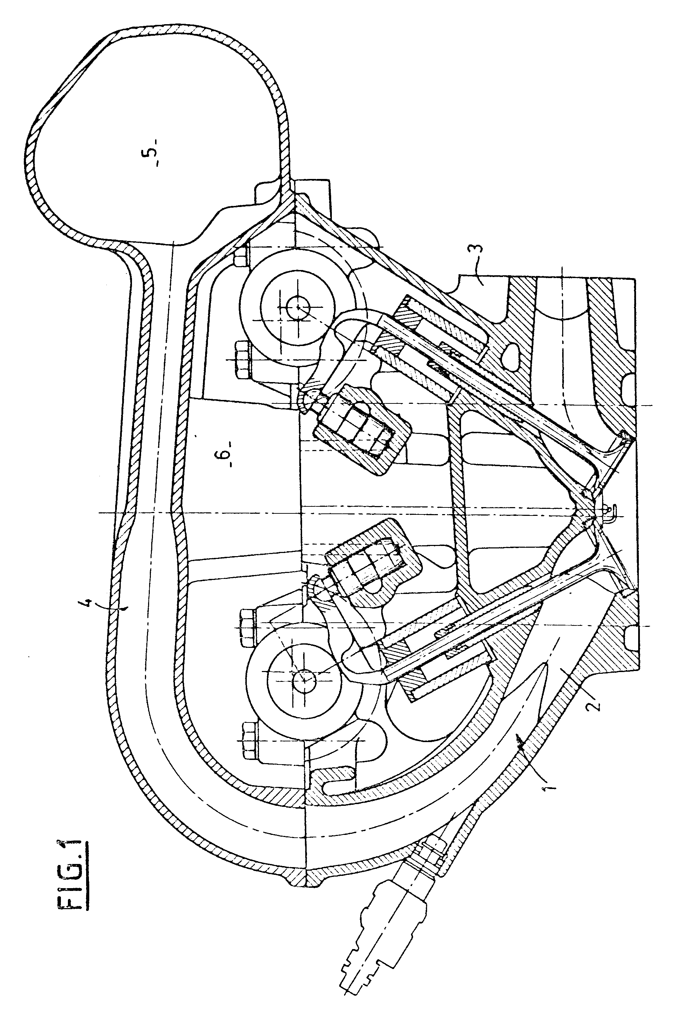

Le dispositif d'admission pour moteur à combustion interne, du type à injection indirecte, à arbre à cames en tête comporte des conduits d'admission 1 d'air comburant. Comme on peut le voir sur la figure 1, ces conduits d'admission 1 sont constitués chacun par un élément de canalisation inférieure 2 qui est disposé dans la culasse 3, et qui est orienté vers le haut de manière, qu'il coopère avec un autre élément de canalisation supérieure 4, qui le prolonge. L'élément de canalisation supérieure 4 recouvre la culasse 3 pour déboucher dans le répartiteur d'air 5.

Les éléments de canalisation supérieure 4 et le répartiteur d'air 5 sont intégrés au couvre-culasse 6.

Les conduits d'admission inférieure 2 débouchent sur la face supérieure de la culasse 3 au voisinage de l'un des bords longitudinaux de façon à permettre aux éléments de canalisation supérieure 4 et au répartiteur d'air 5 d'utiliser pleinement toute la largeur de la culasse pour s'étendre. Ainsi le couvre-culasse recouvre la culasse sans ou presque déborder tout en intégrant de longs éléments de canalisation supérieure, ce qui permet d'obtenir un ensemble extrêmement ramassé et d'encombrement minimal.

Le couvre-culasse 6 est en alliage léger par exemple en aluminium ou encore en alliage à base de magnésium et il est obtenu par fonderie. Selon une variante de l'invention, le couvre-culasse 6 peut être en matériau plastique. Il peut également combiner l'utilisation de matériaux plastiques et d'alliages légers.

La présence des éléments de canalisation supérieure 4 et du répartiteur 5 au-dessus de la culasse 3 peut entraîner dans certaine condition un échauffement indésirable de l'air d'admission. On s'affranchit de ce réchauffement en recouvrant les parois intérieures et/ou extérieures des éléments de canalisation supérieure 4 et du répartiteur 5 de revêtements isolant thermiquement.

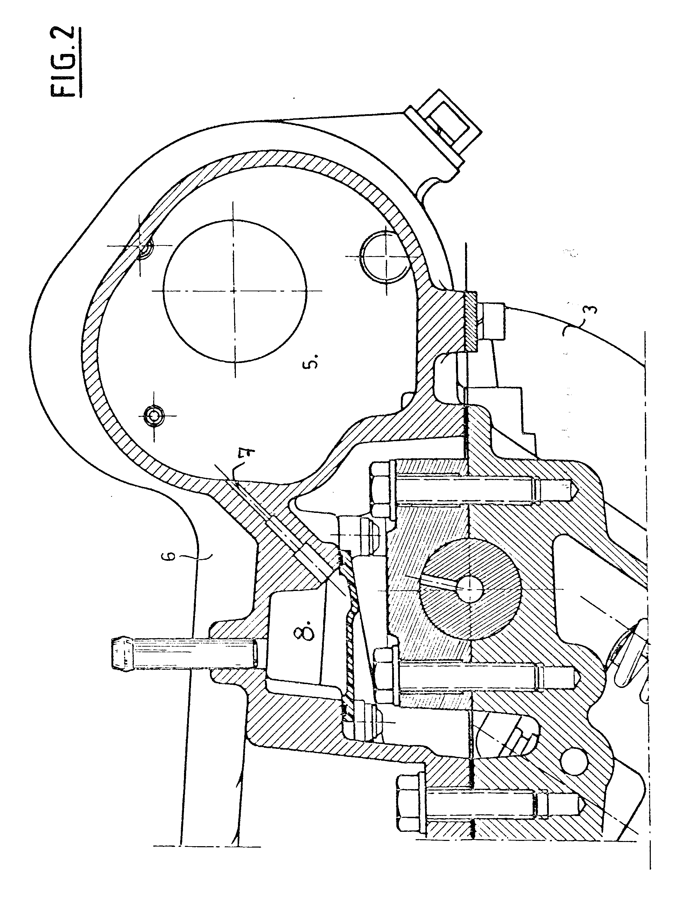

La figure 2 montre un autre avantage de l'invention à savoir la recirculation des gaz de "carter" sans l'adjonction d'une canalisation supplémentaire : un simple perçage 7 permet de mettre en communication le répartiteur d'air 5 avec le logement de décantation 8 disposé entre la culasse 3 et le couvre-culasse 6.

Il est évident que l'invention n'est pas limitée à la réalisation décrite et qu'on peut y apporter des variantes d'exécution. Ainsi les éléments de canalisation supérieure peuvent être de dimensions réduites ou à "acoustique variable".

## Revendications

1. Moteur à combustion interne à injection indirecte, et à arbre à cames en tête (1) comportant des conduits d'admission (1) constitués chacun par un élément de canalisation inférieure (2) dans lequel débouche un injecteur, ledit élément de canalisation étant disposé dans la culasse (3) située à la partie supérieure dudit moteur considéré dans sa position verticale, orienté vers le haut et débouchant sur la surface supérieure de ladite culasse (3) au voisinage d'un bord longitudinal et par un élément de canalisation supérieure (4) prolongeant ledit élément de canalisation inférieure (2), caractérisé en ce que ledit élément de canalisation supérieure (4) surmonte ladite culasse (3) pour déboucher dans un répartiteur d'air (5), ledit élément de canalisation supérieure (4) et ledit répartiteur d' air étant intégrés au couvre-culasse (6) situé à sa partie supérieure de ladite culasse considérée dans sa position verticale, et en ce que la recirculation des gaz de "carter" s'effectue à travers au moins un perçage reliant le répartiteur d'air (5) au logement de décantation (8) disposé entre la culasse (3) et le couvre-culasse (6).

2. Moteur à combustion interne selon la revendication 1, caractérisé en ce que les éléments de canalisation supérieure (4) et le répartiteur d'air (5) s'étendent sur la largeur de la culasse (3).

3. Moteur à combustion interne selon l'une quelconque des revendications 1 à 2, caractérisé en ce que le couvre-culasse (6) est réalisé en alliage léger.

4. Moteur à combustion interne selon l'une quelconque des revendications 1 à 2, caractérisé en ce que le couvre-culasse (6) est réalisé en matériau plastique.

5. Moteur à combustion interne selon l'une quelconque des revendications 1 à 4, caractérisé en ce que les éléments de canalisation supérieure 4 et le répartiteur d'air sont isolés thermiquement.

## Claims

1. An indirect-injection overhead-camshaft internal-combustion engine comprising intake conduits (1) each formed by a lower duct element (2) into which an injector opens, said duct element being disposed in the cylinder head (3) at the upper part of the engine when considered in its vertical position and being oriented upwardly and opening at the upward surface of said cylinder head (3) in the vicinity of a longitudinal edge, and an upper duct element (4) which prolongs said lower duct element (2), characterised in that said upper duct element (4) extends over said cylinder head (3) to communicate with an air distributor (5), said upper duct element (4) and said air distributor being integrated in the cylinder head cover (6) which is disposed at its upper part of said cylinder head when considered in its vertical position, and that recirculation of the crankcase gases is effected through at least one drilling connecting the air distributor (5) to the settlement space (8) which is disposed between the cylinder head (3) and the cylinder head cover (6).

2. An internal-combustion engine according to claim 1 characterised in that the upper duct elements (4) and the air distributor (5) extend over the width of the cylinder head (3).

3. An internal-combustion engine according to either one of claims 1 and 2 characterised in that the cylinder head cover (6) is made of light alloy.

4. An internal-combustion engine according to either one of claims 1 and 2 characterised in that the cylinder head cover (6) is made of plastics material.

5. An internal-combustion engine according to any one of claims 1 to 4 characterised in that the upper duct elements (4) and the air distributor are thermally insulated.

## Patentansprüche

1. Brennkraftmaschine mit indirekter Einspritzung und mit oben liegender Nockenwelle, die Einlaßleitungen (1) aufweist, deren jede aus einem unteren Kanalteil (2) besteht, in dem eine Einspritzanordnung mündet, wobei dieses Kanalteil im Zylinderkopf (3) angeordnet ist, der sich im oberen Abschnitt des in senkrechter Stellung angeordneten Motors befindet, nach oben ausgerichtet ist und in der oberen Fläche des Zylinderkopfes (3) in der Nähe eines Längsrandes mündet, sowie aus einem oberen Kanalteil (4) besteht, das das untere Kanalteil (2) verlängert, dadurch gekennzeichnet, daß das obere Kanalteil (4) den Zylinderkopf (3) überragt und in einem Luftverteiler (5) mündet, daß das obere Kanalteil (4) und der Luftverteiler im oberen Abschnitt des Zylinderkopfdeckels (6) integriert sind, der im oberen Abschnitt des sich in der senkrechten Stellung befindlichen Motors angeordnet ist und daß die Rückführung der Motorgehäusegase durch wenigstens eine Bohrung hindurch erfolgt, welche den Luftverteiler (5) mit dem Sitz einer Reinigungsanordnung (8) verbindet, die zwischen dem Zylinderkopf (3) und dein Zylinderkopfdeckel (6) angeordnet ist.

2. Brennkraftmaschine nach Anspruch 1, dadurch gekennzeichnet, daß die oberen Kanalteile (4) und der Luftverteiler (5) sich über die Breite des Zylinderkopfes (3) erstrecken.

3. Brennkraftmaschine nach einem der Ansprüche 1 bis 2, dadurch gekennzeichnet, daß der Zylinderkopfdeckel (6) aus einer leichten Legierung besteht.

4. Brennkraftmaschine nach einem der Ansprüche 1 bis 2, dadurch gekennzeichnet, daß der Zylinderkopfdeckel (6) aus Kunststoff besteht.

5. Brennkraftmaschine nach einem der Ansprüche 1 bis 4, dadurch gekennzeichnet, daß die oberen Kanalteile (d) und der Luftverteiler thermisch isoliert sind.
